Europäisches Patentamt

European Patent Office

Office européen des brevets

(19)

(11) Veröffentlichungsnummer : **0 094 952**
**B1**

(12) **EUROPÄISCHE PATENTSCHRIFT**

(45) Veröffentlichungstag der Patentschrift :
22.10.86

(21) Anmeldenummer : 82903454.5

(22) Anmeldetag : 26.11.82

(86) Internationale Anmeldenummer :
PCT/EP 82/00252

(87) Internationale Veröffentlichungsnummer :
WO/8302026 (09.06.83 Gazette 83/14)

(51) Int. Cl.⁴ : **G 06 K   9/20**, G 06 K   5/00

(54) VERFAHREN UND VORRICHTUNG ZUM LESEN VON KONTRASTIERENDEN ZEICHEN.

(30) Priorität : 28.11.81 DE 3147225

(43) Veröffentlichungstag der Anmeldung :
30.11.83 Patentblatt 83/48

(45) Bekanntmachung des Hinweises auf die Patenterteilung : 22.10.86 Patentblatt 86/43

(84) Benannte Vertragsstaaten :
AT BE CH DE FR GB LI LU NL SE

(56) Entgegenhaltungen :
US-A- 3 553 646
US-A- 3 713 097
US-A- 3 872 433
US-A- 3 988 571
US-A- 4 013 894
US-A- 4 021 777
US-A- 4 088 877

(73) Patentinhaber : Scantron GmbH & Co. Elektronische
Lesegeräte KG
Legienstrasse 14
D-6230 Frankfurt/Hoechst (DE)

(72) Erfinder : WEVELSIEP, Klaus
Fuchstanzstrasse 11
D-6230 Kriftel (DE)
Erfinder : KURPIELLA, Hubertus
Schlosstrasse 22
D-6000 Frankfurt/Main 90 (DE)

(74) Vertreter : Eisenführ & Speiser
Martinistrasse 24
D-2800 Bremen 1 (DE)

## Beschreibung

Die Erfindung betrifft ein Verfahren zum Lesen von kontrastierenden Zeichen, die auf einem oder mehreren Datenträgern in je mindestens einer Datenspur angeordnet und zu Zeichengruppen zusammengefasst sind und ggfs. Formatsteuerzeichen enthalten, welche das Teilformat der jeweils nachfolgenden Zeichengruppe kennzeichnen, wobei der bzw. die Datenträger optisch abgetastet werden, ein entsprechendes elektrisches Videosignal erzeugt und dekodiert wird, und wobei die gelesenen Zeichen und Formatsteuerzeichen seriell in standard-kodierte binäre Zeichensignale bzw. Formatsteuerzeichen-Signale umgesetzt werden und anschliessend angezeigt, ausgedruckt oder weiterverarbeitet werden, sowie eine Vorrichtung zur Durchführung dieses Verfahrens.

Aus der US-A-3 553 646 ist ein derartiges Verfahren sowie eine derartige Vorrichtung bekannt, bei dem ein Formatsteuerwort, welches in einen Rechner eingebbar ist, die Definition der Teilformate übernimmt. Das Formatsteuerwort ist vom Benutzer einzuprogrammieren, wodurch die Form und Position der zugelassenen Teilformate starr vom jeweils vorprogrammierten Formatsteuerwort abhängt. Die Anordnung der Teilformate kann nur geändert werden, wenn zuvor ein anderes Formatsteuerwort einprogrammiert wird. Eine automatische Vorgabe einer Contextbedingung in Abhängigkeit von den auf den bzw. die Datenträger aufgebrachten Contextsteuerzeichen ist damit nicht verwirklicht.

Aus der US-A-4 021 777 ist es ferner bekannt, auf einen Datenträger einzelne Formatsteuerzeichen aufzubringen, die jeweils nur ein nachfolgendes Teilformat kennzeichnen.

Aufgabe der Erfindung ist es demgegenüber, ein Verfahren und eine Vorrichtung der eingangs genannten Art anzugeben, bei dem eine Contextbedingung — i.e. ein Zusammenhang, dem mehrere Teilformate gemeinsam genügen müssen — automatisch in Abhängigkeit von dem oder den Steuerzeichen vorgebbar ist, die jeweils auf dem oder den Datenträgern angeordnet sind.

Diese Aufgabe wird bei einem Verfahren der eingangs genannten Art erfindungsgemäss dadurch gelöst, dass auf den Datenträgern mindestens ein Contextsteuerzeichen vorgegeben wird, welches eine Contextbedingung festlegt, der mehrere Teilformate zusammen genügen müssen, und dass nach dem Lesen des/der Contextsteuerzeichen(s) geprüft wird, ob die betreffende(n) Contextbedingung(en) von den gelesenen Teilformaten erfüllt wird/werden.

Eine Vorrichtung zur Durchführung des erfindungsgemässen Verfahrens enthält eine Leseeinrichtung zum Lesen und Umwandeln der Zeichen in ein elektrisches Videosignal, einen Dekoder zum Dekodieren des Videosignals, der die gelesenen Zeichen und Formatsteuerzeichen in standard-kodierte binäre Zeichensignale umsetzt oder ggfs. weiterverarbeitet. Eine derartige Vorrichtung ist erfindungsgemäss gekennzeichnet durch mindestens ein Contextsteuerzeichen auf dem Datenträger, einen Speicher, dem bei Abgabe vorgegebener binärer Contextsteuerzeichen-Signale vom Dekoder eine oder mehrere zugeordnete Contextbedingungen einschreibbar sind, und eine elektrische Prüfeinrichtung am Ausgang des Dekoders, welche prüft, ob die im Speicher enthaltene Contextbedingung von den vom Dekoder abgegebenen binären Zeichensignalen erfüllt ist.

Die Vorteile der Erfindung liegen insbesondere darin, dass in Abhängigkeit von Contextsteuerzeichen, die sich auf dem oder den zu lesenden Datenträger(n) befinden, jeweils eine bestimmte Contextbedingung aufgestellt wird, der mehrere Teilformate zusammen genügen müssen, und dass beim Lesen der Teilformate die Einhaltung dieser Contextbedingung überprüft wird. Je nachdem, welche Contextsteuerzeichen sich auf dem oder den Datenträger(n) befinden, können somit verschiedene Contextbedingungen gelten. Die einzuhaltenden Contextbedingungen werden erfindungsgemäss von den jeweiligen Datenträgern — und nicht durch Programmierung seitens des Benutzers — festgelegt.

Mit dem erfindungsgemässen Verfahren lassen sich z.B. Datenfelder nur dann zur Anzeige bzw. Weiterverarbeitung bringen, wenn eine oder mehrere vorgebbare Contextbedingung(en) auch vorhanden sind und beim Lesen des bzw. der Datenfelder erkannt werden. Datenfelder, welche den vorgegebenen Contextbedingungen, welche die Anzahl, die Struktur, die Position der Teilformate festlegen, nicht genügen, werden als fehlerhaft erkannt. Erfindungsgemäss gestatten es Contextsteuerzeichen auch, einen über mehrere Datenträger übergreifenden Zusammenhang für mehrere Teilformate vorzugeben.

Die Erfindung besitzt außergewöhnliche Vorteile z.B. beim automatischen Lesen und Anzeigen von Etiketten, die z.B. mit OCR-A- oder OCR-B-Klarschrift bzw. mit einem Balkencode bedruckt sind und z.B. in einer ersten Datenspur zwei Teilformate und in einer zweiten Datenspur ein weiteres Teilformat, im allgemeinen den Preis, enthalten können. Wird bei derartigen Etiketten eine erste Contextbedingung vorgegeben, welche angibt, daß drei Teilformate gelesen werden müssen, um ein Etikett vollständig zu lesen, so werden alle diejenigen Etiketten verworfen, die eine andere Struktur besitzen, bzw. bei denen ein Teilformat schlecht gedruckt bzw. schlecht lesbar ist. Wird eine zweite Contextbedingung vorgegeben, die vorschreibt, daß bei einem oder zwei nacheinderfolgenden Lesevorgängen insgesamt 6 Teilformate auftreten müssen, bis eine Anzeige oder Weiterverarbeitung der gelesenen Daten erfolgen soll, so bedeutet dies, daß erst dann ein fehlerfreier Lesevorgang ausgeführt ist, wenn zwei Etiketten vorhanden und gelesen sind.

Außerdem läßt sich z.B. dem am Ende eines Datenträgers oftmals vorhandenen Formatsteuerzeichens bzw. einem dort vorgesehenen Contextsteuerzeichen die Bedingung zuordnen, daß umgehend ein weiterer Lesevorgang durchgeführt werden muß, der erst als erfolgreich beendet wird, wenn ein weiterer Datenträger gelesen wird, dessen Formatsteuerzeichen eine weitere Contextbedingung zugeordnet werden kann.

Die Contextbedingung kann erfindungsgemäß auch festlegen, welche Zeichenart die einzelnen Datenträger bzw. einzelne Teilformate besitzen müssen, um einen fehlerfreien Lesevorgang zu gewährleisten.

Besonders bevorzugt wird das erfindungsgemäße Verfahren und die entsprechende Vorrichtung beim omnidirektionalen Lesen von Datenträgern eingesetzt. Beim omnidirektionalen Lesen enthält das bzw. die Datenträger zusätzlich zu den Zeichen und Formatsteuerzeichen vorgegebene Erkennungsmuster, welche Orientierung und Position der Datenspuren auf dem Lesefeld kennzeichnen. Bestehen die Zeichen dagegen selbst aus einem Balkencode, so läßt sich ein Teil der Zeichen zusätzlich zur Festlegung von Orientierung und Position der Datenspuren heranziehen. Beim omnidirektionalen Lesen wird dann zuerst in einem Suchschritt Position und Orientierung des Orientierungsmusters gesucht, und beim Lesen eines derartigen Musters werden bestimmte Koordinaten des Orientierungsmusters (PIC-Muster) abgespeichert und daraus Orientierung und Position der Datenspuren berechnet. Anschließend wird in einem Lesevorgang der bzw. die Datenträger optisch abgetastet, und die Zeichen bzw. Formatsteuerzeichen werden anschließend gemäß den Merkmalen der Patentansprüche weiterverarbeitet. Die erfindungsgemäßen Merkmale besitzen beim omnidirektionalen Lesen mehrerer auf dem Lesefenster angeordneter, unterschiedlich orientierter Datenträger ganz besondere Vorteile, da dann nach dem Auffinden und während des Lesens eines Datenfeldes eine Contextbedingung vorgegeben werden kann, die einen zweiten Suchvorgang nach einem zweiten Datenträger auslöst und erst dann den gesamten Lesevorgang beendet, wenn auch der zweite Datenträger in der vorgegebenen Weise gelesen ist.

Vorteilhafte Weiterbildungen der Erfindung sind durch die Merkmale der Unteransprüche gekennzeichnet.

Im folgenden wird ein Ausführungsbeispiel der Erfindung anhand der Zeichnungen näher erläutert. Es zeigen:

Figur 1 einen Datenträger mit zwei Datenspuren und drei Teilformaten ; und

Figur 2 ein Blockschaltbild der erfindungsgemäßen Vorrichtung.

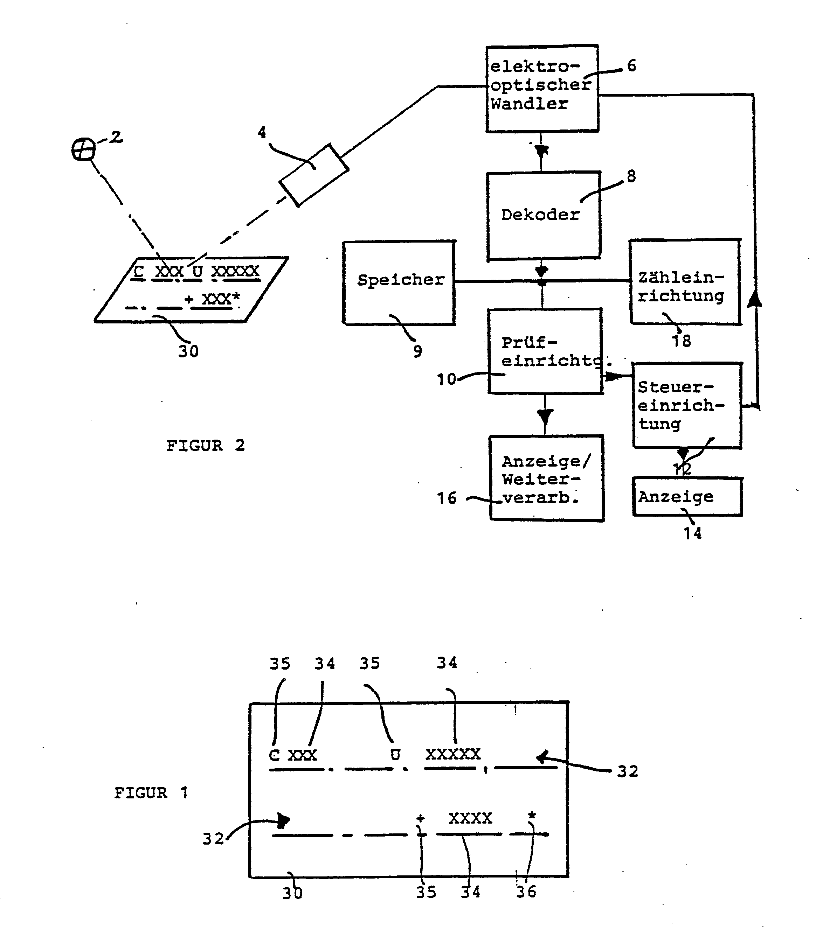

Figur 1 zeigt einen Datenträger 30 mit zwei Datenspuren 32. Jede Datenspur 32 enthält ein oder mehrere Formatsteuerzeichen 35, die zum Beispiel das Format der nachfolgenden Zeichengruppe 34 kennzeichnen. So soll zum Beispiel das Formatsteuerzeichen C am Anfang der ersten Datenspur 32 — nach allgemein bekannten Vorschriften — festlegen, daß die nachfolgende Zeichengruppe 34 aus einer vorgegebenen Anzahl an Zeichen, z. B. drei, besteht. Das anschließende Formatsteuerzeichen U legt z. B. fest, daß die nachfolgende Zeichengruppe 34 fünf Zeichen enthält, und das Formatsteuerzeichen + in der zweiten Datenspur 32 legt z. B. fest, daß das Format der nachfolgenden Zeichengruppe 34 vier Zeichen umfaßt.

Zusätzlich wird erfindungsgemäß dem Formatsteuerzeichen C z. B. die Contextbedingung zugeordnet, daß insgesamt drei Zeichengruppen oder Teilformate auf dem Datenträger vorhanden sind. Am Ende der zweiten Datenspur 32 ist noch ein Contextsteuerzeichen, z. B. *, welchem die Contextbedingung zugeordnet sein kann, daß ein weiterer Datenträger folgt, welches z. B. eine bestimmte Anzahl an Datenspuren besitzen soll.

Figur 2 zeigt ein Blockschaltbild der Vorrichtung. Ein Datenträger 30, z. B. gemäß Fig. 1, wird von einer Beleuchtungseinrichtung 2 angestrahlt und von einer Leseeinrichtung 4, z. B. einem Vidikon, gelesen. Diese Leseeinrichtung 4 enthält einen opto-elektronischen Wandler 6, der die auf einem Schirm oder eine Diodenmatrix abgebildeten Zeichen abtastet und ein dem Abtast-Zyklus entsprechendes elektrisches Videosignal an einen Decoder 8 abgibt, welcher die in dem Videosignal enthaltene Information, d. h. die gelesenen Zeichen und Formatsteuerzeichen etc. in Standard-codierte binäre Signale umsetzt.

Am Ausgang des Decoders 8 ist ein Speicher 9 angeschlossen, dem eine Contextbedingung automatisch einschreibbar ist, wenn der Decoder ein Formatsteuerzeichensignal oder ein Contextsteuerzeichensignal abgibt. Der Ausgang des Decoders 8 ist ferner mit einer elektrischen Prüfeinrichtung 10 verbunden, welche prüft, ob die im Speicher 9 enthaltene Contextbedingung von den vom Decoder 8 abgegebenen binären Zeichensignalen erfüllt ist. Ist die Contextbedingung erfüllt, so gibt die Prüfeinrichtung die vom Decoder abgegebenen binären Signale zum Beispiel an die Anzeige oder Weiterverarbeitungseinrichtung 16 weiter, welche die Signale entweder zur Anzeige bringt bzw. in gewünschter Form weiterverarbeitet. Gibt die Prüfeinrichtung dagegen ein Fehlersignal ab, weil die Contextbedingung nicht erfüllt ist, so wird dieses Fehlersignal einer Steuereinrichtung 12 zugeführt, die an die Leseeinrichtung 6 ein Auslösesignal zur Wiederholung des Lesevorganges abgibt und in der Anzeige 14 die Wiederholung des Lesevorganges anzeigt. Alternativ kann das Auslösesignal auch andere Abläufe auslösen.

Speicher 9, Prüfeinrichtung 10 und gegebenenfalls Steuereinrichtung 12 lassen sich durch einen Mikroprozessor verwirklichen.

Dem Decoder nachgeschaltet ist ferner eine Zähleinrichtung 18, welche die empfangenen binären Formatsteuerzeichen-Signale zählt. Die Prüfeinrichtung 10 läßt sich so ausbilden, daß ein Steuersignal zur Weiterverarbeitung der binären Signale abgegeben wird, wenn die Zahl der gelesenen Teilformate z. B. der durch eine Contextbedingung vorgegebenen Anzahl entspricht.

Wenn also z. B. ein binäres Signal vom Decoder 8 abgegeben wird, welches dem Contextsteuerzeichen 36 entspricht, so wird von der Prüfeinrichtung ebenfalls ein Signal erzeugt, welches entweder über die Steuereinrichtung 12 oder direkt einen weiteren Lesevorgang auslöst, um den zweiten Datenträger (nicht dargestellt) zu lesen. Die Prüfeinrichtung 10 prüft dann anschließend, ob tatsächlich der zweite Datenträger in der von dem Contextsteuerzeichen 36 vorgegebenen Form mit entsprechenden Teilformaten etc. vorliegt. Ist dies nicht der Fall, wird ein Fehlersignal erzeugt. Wird die Contextbedingung erfüllt, kann ein Auslösesignal abgegeben bzw. können die gelesenen — und gegebenenfalls zwischengespeicherten bzw. abgespeicherten — Daten teilweise oder vollständig zur Anzeige oder Weiterverarbeitung gebracht werden.

**Patentansprüche**

1. Verfahren zum Lesen von kontrastierenden Zeichen, die auf einem oder mehreren Datenträgern in je mindestens einer Datenspur angeordnet und zu Zeichengruppen zusammengefasst sind und ggfs. Formatsteuerzeichen enthalten, welche das Teilformat der jeweils nachfolgenden Zeichengruppe kennzeichnen, wobei der bzw. die Datenträger optisch abgetastet werden, ein entsprechendes elektrisches Videosignal erzeugt und dekodiert wird, und wobei die gelesenen Zeichen und Formatsteuerzeichen seriell in standard-kodierte binäre Zeichensignale bzw. Formatsteuerzeichen-Signale umgesetzt werden und anschliessend angezeigt, ausgedruckt oder weiterverarbeitet werden, dadurch gekennzeichnet, dass auf den Datenträgern mindestens ein Contextsteuerzeichen vorgegeben wird, welches eine Contextbedingung festlegt, der mehrere Teilformate zusammen genügen müssen, und dass nach dem Lesen des/der Contextsteuerzeichen(s) geprüft wird, ob die betreffende(n) Contextbedingung(en) von den gelesenen Teilformaten erfüllt wird/werden.

2. Verfahren nach Anspruch 1, dadurch gekennzeichnet, dass einzelnen Formatsteuerzeichen die Funktion eines Contextsteuerzeichens zugeordnet wird, und dass beim Lesen der binären Formatsteuerzeichen-Signale geprüft wird, ob die Contextbedingung von den gelesenen Teilformaten erfüllt wird.

3. Verfahren nach Anspruch 1 oder 2, dadurch gekennzeichnet, dass die Contextbedingung die Reihenfolge vorgegebener Teilformate festlegt.

4. Verfahren nach Anspruch 1 oder 2, dadurch gekennzeichnet, dass die Contextbedingung die Anzahl der Teilformate des bzw. der Datenfelder festlegt.

5. Verfahren nach Anspruch 1 oder 2, dadurch gekennzeichnet, dass die Contextbedingung die Position mehrerer Teilformate innerhalb des bzw. der Datenfelder festlegt.

6. Verfahren nach einem der vorstehenden Ansprüche, dadurch gekennzeichnet, dass die Contextbedingung sich auch auf vorausgegangene Teilformate des bzw. der Datenfelder erstreckt, dass diejenige Grösse der einzelnen Teilformate, über welche die Contextbedingung eine Aussage macht, beim Lesen des bzw. der Datenfelder gespeichert wird und nach dem Lesevorgang und dem Dekodiervorgang geprüft wird, ob die Contextbedingung erfüllt ist.

7. Vorrichtung zur Durchführung des Verfahrens nach einem der Ansprüche 1 bis 6, mit einer Leseeinrichtung zum Lesen und Umwandeln der Zeichen in ein elektrisches Videosignal, mit einem Dekoder zum Dekodieren des Videosignals, der die gelesenen Zeichen und Formatsteuerzeichen in standard-kodierte binäre Zeichensignale umsetzt oder ggfs. weiterverarbeitet, gekennzeichnet durch mindestens ein Contextsteuerzeichen auf dem Datenträger, einen Speicher (9), dem bei Abgabe vorgegebener binärer Contextsteuerzeichen-Signale vom Dekoder (8) eine oder mehrere zugeordnete Contextbedingungen einschreibbar sind, und eine elektrische Prüfeinrichtung (10) am Ausgang des Dekoders (8), welche prüft, ob die im Speicher (9) enthaltene Contextbedingung von den vom Dekoder (8) abgegebenen binären Zeichensignalen erfüllt ist.

8. Vorrichtung nach Anspruch 7, dadurch gekennzeichnet, dass die Contextbedingung die Anzahl der Teilformate des bzw. der Datenfelder festlegt, dass eine Zähleinrichtung (18) am Ausgang des Dekoders (8) die empfangenen binären Formatsteuerzeichen-Signale zählt, und dass die Prüfeinrichtung (10) ein Steuersignal zur Weiterverarbeitung der binären Signale abgibt, wenn die Zahl der gelesenen Teilformate der durch die Contextbedingung vorgegebenen Anzahl gleich ist, und dass die elektrische Prüfeinrichtung (10) ein Fehlersignal abgibt, wenn die Anzahl der Teilformate die Contextbedingung nicht erfüllt.

9. Vorrichtung nach Anspruch 7 oder 8, dadurch gekennzeichnet, dass der Prüfeinrichtung (10) eine Steuereinrichtung (12) nachgeschaltet ist, die bei Empfang eines Fehlersignals ein Auslösesignal an die Leseeinrichtung (6) zur Wiederholung des Lesevorganges abgibt, und die bei Empfang von Fehlersignalen bei durch Fehlersignale ausgelösten Lesevorgängen einen Lesefehler anzeigt.

**Claims**

1. A method of reading contrasting characters which are arranged on one or more data carriers in at least one data track each and combined into groups of characters and contain if necessary format control characters which characterize the partial format of the respectively succeeding group of characters, where the data carrier(s) get scanned optically and a corresponding electrical video signal is generated and decoded, and where the read characters and format control characters get converted in series into standard-coded binary character signals or respectively format control character signals and subsequently displayed, printed out or further processed, characterized in that on the data carriers at least one context control character is preset, which establishes a context condition for which a number of partial formats together must be sufficient, and that after the reading of the context control character(s) it is checked whether the context condition(s) in question of the read partial formats is/are being fulfilled.

2. A method as in Claim 1, characterized in that with individual format control characters is associated the function of one context control character, and that upon reading the binary format control character signals it gets checked whether the context condition of the read partial formats is being fulfilled.

3. A method as in Claim 1 or 2, characterized in that the context condition establishes the sequence of preset partial formats.

4. A method as in Claim 1 or 2, characterized in that the context condition establishes the number of partial formats in the data array or arrays.

5. A method as in Claim 1 or 2, characterized in that the context condition establishes the position of a number of partial formats within the data array or arrays.

6. A method as in one of the preceding Claims, characterized in that the context condition extends also to previous partial formats in the data array or arrays, that that value of the individual partial formats about which the context condition makes a statement, upon reading from the data array or arrays, gets stored and after the reading process and the decoding process it gets checked whether the context condition has been fulfilled.

7. A device for the performance of the method as in one of the Claims 1 to 6, having one reading device for reading and conversion of the characters into an electrical video signal, having for the decoding of the video signal one decoder which converts into standard coded binary character signal or if necessary further processes the read characters and format control characters, characterized by at least one context control character on the data carrier, one store (9) into which may be read upon the emission of preset binary context control character signals from the decoder (8), one or more associated context conditions, and at the output from the decoder (8) one electrical test device (10) which checks whether the context condition contained in the store (9), of the binary character signals emitted by the decoder (8) has been fulfilled.

8. A device as in Claim 7, characterized in that the context condition establishes the number of the partial formats in the data array or arrays, that a counter (18) at the output from the decoder (8) counts the received binary format control character signals, and that the test device (10) emits a control signal for the further processing of the binary signals if the number of the read partial formats is equal to the number preset through the context condition, and that the electrical test device (10) emits an error signal if the number of the partial formats does not fulfil the context condition.

9. A device as in Claim 7 or 8, characterized in that after the test device (10) is connected a control device (12) which upon receipt of an error signal emits a release signal to the reading device (6) for the repetition of the reading process and which upon receipt of error signals in the case of reading processes released through error signals displays a reading error.

## Revendications

1. Procédé de lecture de signes apparaissant par contraste, qui sont disposés sur une ou plusieurs zones de données d'au moins une piste de données, qui sont réunis en groupe de signes et qui contiennent le cas échéant des signes de commande de format caractérisant le format partiel du groupe de signes suivant, le ou les zones de données étant palpées par voie optique, un signal vidéo électrique correspondant étant produit et décodé, les signes et les signes de commande de format lus étant convertis en séquence en signaux binaires à codage standard et en signaux binaires de signes de commande de format et étant ensuite affichés, imprimés ou traités, caractérisé en ce qu'il est prévu sur les zones de données au moins un signe de commande d'environnement qui détermine une condition d'environnement que plusieurs formats partiels doivent remplir conjointement, et en ce qu'après la lecture du/des signes de commande d'environnement, on examine si la (les) condition(s) d'environnement est/sont remplie(s) par les formats partiels lus.

2. Procédé selon la revendication 1, caractérisé en ce qu'on associe à chaque signe de commande de format la fonction d'un signe de commande d'environnement, et en ce que lors de la lecture des signaux binaires de signes de commande de format, on examine si la condition d'environnement est remplie par les formats partiels lus.

3. Procédé selon la revendication 1 ou la revendication 2, caractérisé en ce que la condition d'environnement détermine l'ordre de succession de formats partiels prédéterminés.

4. Procédé selon la revendication 1 ou la revendication 2, caractérisé en ce que la condition d'environnement détermine le nombre des formats partiels de la ou des zones de données.

5. Procédé selon la revendication 1 ou la revendication 2, caractérisé en ce que la condition d'environnement détermine la position de plusieurs formats partiels à l'intérieur de la ou des zones de données.

6. Procédé selon l'une des revendications précédentes, caractérisé en ce que la condition d'environnement s'étend à des formats partiels précédents de la ou des zones de données, en ce qu'on met en mémoire lors de la lecture de la ou des zones de données la grandeur des formats partiels individuels sur lesquels la condition d'environnement donne un message et on examine, après l'opération de lecture et l'opération de décodage, si la condition d'environnement est remplie.

7. Dispositif pour la mise en pratique du procédé selon l'une des revendications 1 à 6, avec un organe de lecture pour lire les signes et les convertir en un signal vidéo électrique, avec un décodeur pour décoder le signal vidéo, ce décodeur codant les signes et les signes de commande de format lus en signaux binaires à codage standard, ou les traitant le cas échéant, caractérisé par au moins un signe de commande d'environnement sur la zone de données par une mémoire (9), dans laquelle on peut enregistrer une ou plusieurs conditions d'environnement associées lors de l'émission par le décodeur (8) de signaux binaires prédéterminés de signes de commande d'environnement, et par un organe de contrôle électrique (10) à la sortie du décodeur (8), cet organe examinant si la condition d'environnement contenue dans la mémoire (9) est remplie par les signaux binaires émis par le décodeur (8).

8. Dispositif selon la revendication 7, caractérisé en ce que la condition d'environnement détermine le nombre des formats partiels de la ou des zones de données, en ce qu'un organe de comptage (18) compte, à la sortie du décodeur, les signaux binaires de signes de commande de format reçus, et en ce que l'organe de contrôle (10) émet un signal de commande pour le traitement des signaux binaires, si le nombre des formats partiels reçus est égal au nombre prédéterminé par la condition d'environnement, et en ce que l'organe de contrôle électrique (10) émet un signal d'erreur si le nombre des formats partiels ne remplit pas la condition d'environnement.

9. Dispositif selon la revendication 7 ou la revendication 8, caractérisé en ce qu'un organe de commande (12) est branché à la suite de l'organe de contrôle (10), cet organe de commande envoyant, lors de la réception d'un signal d'erreur, un signal de déclenchement à l'organe de lecture pour la répétition de l'opération de lecture, et affichant une erreur de lecture en cas de réception de signaux d'erreurs lors d'opérations de lecture déclenchées par des signaux d'erreur.

elektrooptischer
Wandler — 6

⊕ — 2

4

Dekoder — 8

Speicher — 9

Zähleinrichtung — 18

Prüfeinrichtg. — 10

Steuereinrichtung — 12

C XXX U XXXXX
+ XXX*
— 30

FIGUR 2

Anzeige/
Weiterverarb. — 16

Anzeige — 14

35    34    35         34

C XXX         U    XXXXX — 32

FIGUR 1

32 — + XXXX *

30    35   34   36